# EUROPEAN PATENT APPLICATION

(11) **EP 4 692 570 A1**
(43) Date of publication of application: **11.02.2026**
(21) Application number: 24398015.8
(22) Date of filing: 06.08.2024
(51) Int. Cl.: F16B 5/06, F16B 7/04, F16B 21/09, F16B 3/00, F16B 5/00

(54) **GUIDE FOR FLEXIBLE TUBES AND RESPECTIVE COUPLING PROCESS**

(71) Applicant: Moreira Dos Santos, Miguel Augusto, 3500-147 Viseu (PT)
(72) Inventor: Moreira Dos Santos, Miguel Augusto, 3500-147 Viseu (PT)
(74) Representative: Pelayo de Sousa Henriques, Rui

(57) **Abstract**

The present invention concerns a guide (1) for flexible pipes, specially developed so that the user, when painting or repainting vehicles with a spray gun, can do so comfortably without the hose getting caught in obstacles, characterized by being equipped with a handle (2), by being equipped with a base (4) that integrates a magnet and by being equipped with a body (6) and by the orthogonal projection of any transversal section of the body is, in whole or in part, inside to the orthogonal projection of the outer contour line of the handle.

## Description

The present invention relates to a device that serves as a guide for a hose, pipe or cable.

It was specially developed so that the user, when painting/repainting vehicles with a spray gun, can do so comfortably without the hose getting stuck in obstacles, particularly in the vehicle itself.

This device also has application in vehicle washing and related activities.

It is therefore of interest to companies and workshops that do not have robotic means to carry out painting, and/or polishing and/or vehicle washing work.

### STATE OF THE ART

When washing vehicles, particularly vehicles equipped with wheels, it is common to use wedges that fit into the wheels or tires and which, fixed in this way, allow the hose to slide without getting stuck precisely in the tires or wheels.

However, these devices have several drawbacks.

First of all, it is necessary that the wedges do not move and this immobility, essential for the hose to slide properly, must be guaranteed by wedging the wedge to guarantee its fixation.

When the axles of the vehicle's wheels are substantially far from the front and far from the rear of the vehicle, that is, when such axles are far from the front and rear ends of the bodywork, the wedges are not practical at all and the hose easily ends up rubbing against the bodywork.

With the invention in question, it is intended that the stability of the hose guide is not dependent on the vehicle's wheel pinching or the positioning of the vehicle's wheels.

This aspect of the wedges stuck in the vehicle wheels is a major inconvenience, as it limits the action of the user/painter who must move the hose away from the bodywork.

The present invention solves this problem and allows the invented guide to be used in automobile repainting booths in which loose parts of the bodywork are often painted and not necessarily the entire automobile.

When painting these loose pieces, traditional wedges cannot even be used as there are no wheels to wedge them.

Furthermore, the guide, which will be described in detail below, has a set of technical features that make it very versatile and allow for a variety of uses.

What is intended, and ensured with the invented guide, is to allow anyone who, for the purpose of painting and/or washing vehicles, or other similar work, has to handle a pipe, be able to carry out their work comfortably and quickly without having to constantly unravel or release the pipe because it has become stuck in an obstacle.

In the present invention, it is enough to slide the pipe through the guide, or guides, by simply pulling the tube effortlessly.

Furthermore, placing two guides spaced apart on a wall allows the flexible pipe to be wrapped comfortably around these guides, providing a tidy solution for the pipe when it is not in use.

### DESCRIPTION OF THE INVENTION

The invention consists of a guide for flexible pipes and is characterized by being equipped with a handle, by being equipped with a base that integrates a magnet and by being equipped with a body.

The guide is also characterized in that the orthogonal projection of any transversal section of the body is, in whole or in part, inside to the orthogonal projection of the outer contour line of the handle.

The body is the connecting element between the handle and the base, this connection being permanent or removable.

Nothing prevents the handle from having, for example, the shape of a star and that the invented guide, from a top view, allows part(s) of the body to be seen.

In fact, the handle, the body and the base, in one version of the invention, constitute a single piece, with the base integrating a magnet.

But the invention is also designed in such a way that the body and the base have a removable connection between them.

The body and the handle can also be joined by a removable connection between them.

Alternatively, there may be, simultaneously, a removable connection either between the body and the base or between the body and the handle.

The base is characterised for being always equipped with a permanent magnet.

The magnet that the guide for flexible pipes is equipped with ensures effective fixation of the guide, particularly to the standard metal gratings that the repainting cabins have, and the guide or guides can be positioned on the metal floor grilles, appropriately distanced from the vehicle to be repainted/ washed or the parts to be painted/washed.

On the other hand, in a possible embodiment of the invention, the handle of the invented guide is equipped, on its outer contour, with a configuration that fits into the conjugate shape of the outer contour of another handle according to the invention.

Broadly speaking, it can be said that the handle of the guide is characterized by being equipped with a male and/or female fitting on its outer contour.

The base of the guide, on its lower face, may be equipped with a flap with a groove, or grooves, with the aim of making more effective the connection of the guide to the metal gratings that the repainting/washing cabins have.

In this case, the magnet that the base of the guide incorporates will also be equipped with a groove, or grooves, aligned with the groove or grooves of the flap.

The guide for flexible pipes is also characterized in that the base being equipped with one or more ribs and the magnet being equipped with one or more corresponding flutes, or vice versa.

The combination of the ribs and the flutes allows the magnet to be well fixed to the base.

Furthermore, the handle of the invented guide, in its outer contour, may also be equipped with a recess or recesses consisting of a concave surface that may have the approximate shape of an arc.

This allows that, when two guides are coupled by fitting the respective handles, their recesses come together to form a niche that allows the tip of the pipe to be supported.

After this process of coupling the guides by the respective handles, a hole may form in the area of the male-female fitting as described below.

This feature is important for storing the tip of the hose or the tip of the pipe, to which a nozzle or gun may be attached.

Once two guides are fitted together using a conjugate fitting, which can be of the male-female type, it is expected that a hole is formed which allows the pipe to be oriented vertically when the guides are fixed in a horizontal plane.

The process of coupling guides for flexible pipes consists of joining, by the handles, two guides according to the invention, one of the guides being characterized by being equipped with a handle with a male fitting and the other being equipped, on the handle, with a female fitting, this male-female fitting resulting in a hole.

The hole thus formed allows the pipe to be oriented vertically when the guides are fixed in a horizontal plane.

This is an additional advantage of the present invention.

Whenever the word pipe is used in the description, it means flexible pipe.

In one of the possible embodiments of the invention, the body, on its lower surface, is equipped with a body/base fitting device and the upper surface of the base is equipped with a base/body fitting device.

In another possible embodiment of the invention, the body, on its upper surface, is equipped with a body/handle fitting device and the lower face of the handle is equipped with a handle/body fitting device.

On the other hand, a removable connection of the body is possible both in relation to the handle and in relation to the base, with the body characterized in that, on its upper and lower surfaces, being equipped, respectively, with a body/handle fitting device and a body/base fitting device and for the handle, on its lower face, having a handle/body fitting device and also for the base, on its upper surface, having a base/body fitting device.

Therefore, this allows any of the three parts of the guide to be exchanged: handle, body and base.

If any part becomes damaged or worn out, it can be easily replaced while keeping the other two.

Furthermore, before repainting a vehicle or painting parts, that is, in the preparatory phase, it can be chosen a base, or a handle, for the guide with the colour in which the vehicle/part will be painted.

Thus, the guide also works as a signal in the sense that the painter can have an additional element to confirm the colour of the paint to be applied: white, green, blue, etc.

These are other advantages of the present invention.

For a better understanding of the invention, the references and names of the parts that constitute it are indicated below:
1 - guide for flexible pipes or guide
2 - handle
   21 - outer contour of the handle
   22 - handle/body fitting device
   23 - male and/or female fitting
   24 - lower face of the handle
   25 - recess

### [Fitting device (handle/body or base/body)]

31 - locking slide
   311 - gutter
   312 - concavity
32 - by pressure
   321 - cavity

4 - base
   41 - magnet
      411 - groove
      412 - flute
   43 - upper surface of the base
   44 - base/body fitting device
   45 - rib
   46 - flap with groove
6 - body
   61 - upper surface of the body
   62 - lower surface of the body
   63 - body/base fitting device
   64 - body/handle fitting device
   65 - outer contour of the body

### [Fitting devices (body/base or body/handle)]

31 - locking slide
   711 - rail
   712 - lamella
      7121 - protuberance
32 - by pressure
   721 - head pin
8 - hole
9 - sleeve
   91 - tear

Taking advantage of the numerical references above, other embodiments of the invention are detailed below.

In a removable connection between the body (6) and the base (4), the guide (1) may be characterized in that the body/base fitting device (63) combined with the base/body fitting device (44) preventing the movement of the body (6) around its longitudinal axis.

In a removable connection between the body (6) and the handle (2), the guide (1) may be characterized in that the body/handle fitting device (64) combined with the handle/body fitting device (22) prevent the movement of the body (6) around its longitudinal axis.

Unlike a traditional fitting of a puzzle in which the fitting of the pieces leads to a continuous surface, as if it were a postcard, the male and/or female fitting (23) is designed so that when two handles (2) are fitted together they form a hole (8).

There are no guides (1) known on the market that fit together and allow vertical orientation of the pipe.

In another embodiment of the invention, both the body/base fitting device (63) and the body/handle fitting device (64), as well as the base/body fitting device (44) and the handle/body fitting device (22), all together allow the movement of the body (6) around its longitudinal axis.

Whenever the guide (1) has at least one removable connection, whether the connection body/handle and handle/body or body/base and base/body, a sleeve (9) can be incorporated around the body (6) in the course of assembling the guide (1) .

This sleeve (9) rotates freely between the base (4) and the handle (2), making it easier for the user to handle the pipe, as it reduces friction when the user pulls the flexible pipe.

If the handle (2), the body (6) and the base (4) of the guide (1) constitute a single piece, the invention is characterized in that between the base and the handle, the body (6) is equipped with a sleeve (9) with a tear (91) and with elastic capacity.

The sleeve (9) will have a longitudinal tear (91), and the edges of this tear, under pressure, can be moved apart and thus allow the sleeve (9) to embrace the body (6) and return to its initial position once it has ceased that pressure.

Furthermore, the guide (1) is also characterized in that the fitting device - handle/body, base/body, body/base and body/handle - among other solutions, can comprise, on each of the upper and lower surfaces of the body (61, 62), a head pin (721), comprise, on the upper surface of the base (43), a cavity (321) of conjugate form to that of the head pin (721), also comprising, on the lower face of the handle (24), a cavity (321) of conjugate form to that of the other head pin (721) and by the cross-section of the largest area of each of the head pins (721) is greater than the cross-section of smaller area of the respective cavities (321).

Thus, the head pins (721) enter by pressure (32) into the respective cavities (321) of the base and of the handle.

The head pins (721) may have a spherical or spherical cap head.

Either the cavity (321) on the upper surface of the base (43), or the cavity (321) on the lower face of the handle (24), may be equipped with a first part in the form of a pyramid trunk with circular bases tapering towards the interior of the base (4) and tapering towards the interior of the handle (2), respectively, and of a second part symmetrical to the first one and the common base of the two pyramid trunks will have a diameter slightly smaller than the diameter of the head pins (721).

In another solution, the guide (1) is characterized in that the body (6), on each of its upper and lower surfaces (61) and (62), is equipped with a locking slide fitting device (31), which is combined with either the combined fitting on the upper surface of the base or with the conjugate fitting on the lower face of the handle.

In this solution, the locking slide fitting device (31) is equipped, either on the upper surface of the base (43) - and as part of it as a whole - or on the lower face of the handle (24), with a gutter (311) in the shape of a "U" and with a concavity (312).

In turn, both the upper surface of the body (61) and the lower surface of the body (62) are equipped with a protruding area that integrates two rails (711) and, between them, a flexible lamella (712) with a protuberance (7121).

The lamellas (712) in the resting position, that is, when they are not in tension, develop horizontally, that is, in a plane perpendicular to the longitudinal axis of the body (6) .

Each lamella (712) has a free part and in the rest position, these free parts neither contact the lower surface of the body (62) nor the upper surface of the body (61).

It is also in these free parts that each lamella (712) has a protuberance (7121).

### DESCRIPTION OF THE FIGURES

For a better understanding of the invention, a set of exemplary drawings is presented, which should not limit it:

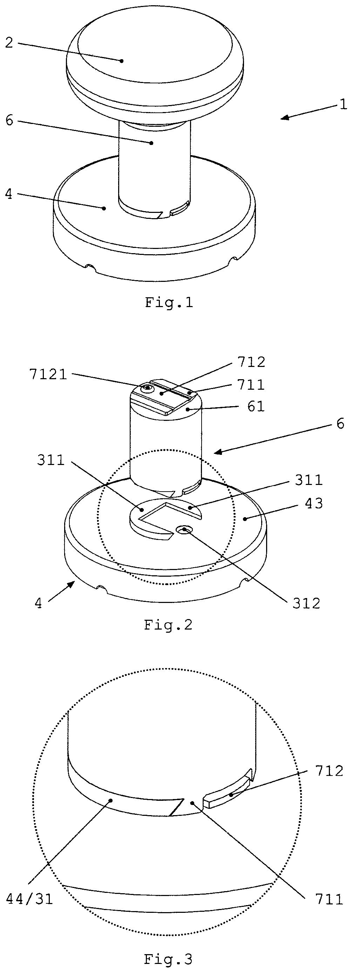

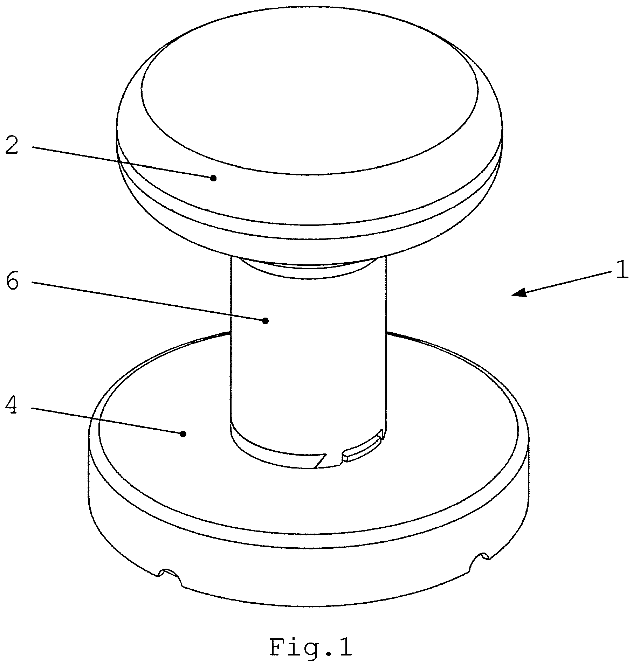

- in figure 1, is shown a guide (1), in perspective, according to the invention, with the handle (2), the body (6) and the base (4);
- in figure 2, a base (4) and a body (6) are shown in exploded perspective before fitting between them is promoted, with the upper surface of the base (43) being equipped with a base/body fitting device, the gutter (311) and the concavity (312) of that device are visible, and it is also visible that the upper surface (61) of the body and the lower surface of the body are equipped with a rail (711), a lamella (712) and a protuberance (7121); the figure therefore shows a base/body fitting device of locking slide type;
- in figure 3, the detail shown in the previous figure is shown but after the fitting between the base and the body has been promoted, the base/body fitting device (44) [(44)/(31)], the rail (711) and the lamella (712) are visible, which constitutes, in the example, the locking slide fitting device (31) [(44)/(31)];

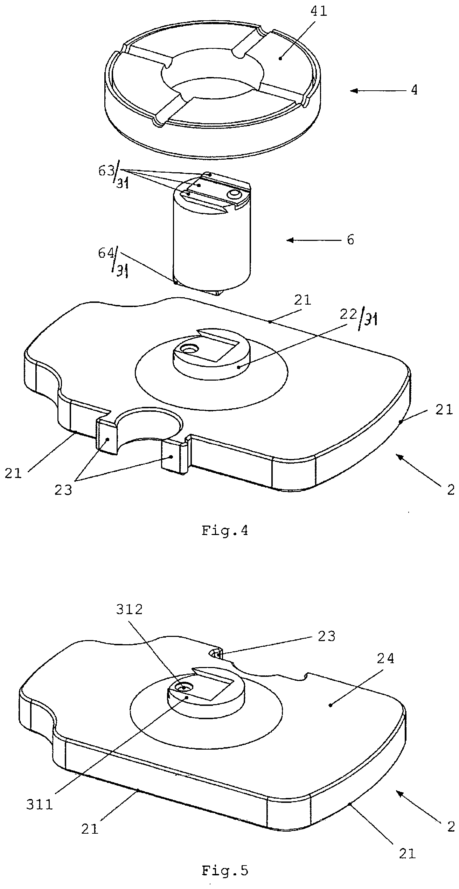

- in figure 4, an exploded view of the invention is represented, with the handle (2) equipped with a male-female fitting (23), more precisely a male, and a handle/body fitting device (22) [(22)/(31)], with the outer contour of the handle (21) being visible; the body (6) being equipped with either a body/handle fitting device (64) [(64)/(31)] or a body/base fitting device (63) [(63)/(31)]; and the base (4) being equipped with a magnet (41) and the lower face of the base being visible, in the centre;
- in figure 5, a handle (2) is represented in perspective, which is equipped with a male-female fitting (23), more precisely a female, handle that could be fitted to the handle of the previous figure, being visible the lower face of the handle (24), the outer contour of the handle (21) and the gutter (311) and the concavity (312) that constitute the handle/body fitting device;

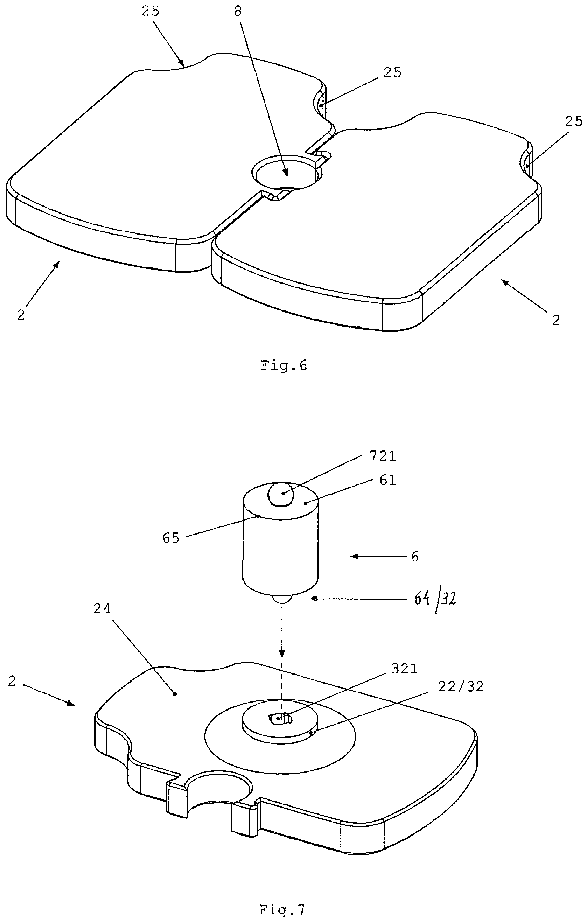

- in figure 6, two handles (2) are shown in perspective, joined by means of a male-female fitting, with this fitting delimiting the hole (8); both handles are equipped with recesses (25), forming a niche in the central area;
- in figure 7, an exploded perspective shows a handle (2) and a body (6) before fitting between them is promoted, with the lower face of the handle (24) being equipped with a handle/body fitting device (22) [(22)/(32)] by pressure (32), being visible the cavity (321) of that device; it is also visible that the lower surface of the body (62) and the upper surface of the body are equipped with a head pin (721) and the outer contour of the body (65) is also visible; the figure also shows the body/handle fitting device (64) [(64)/(32)] by pressure (32);

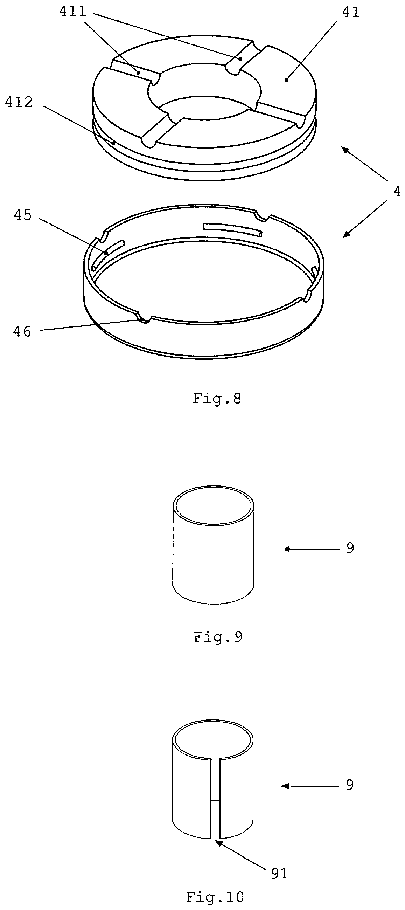

- in figure 8, an exploded perspective represents the base (4) equipped with a flap with grooves (46) and equipped, inside, with ribs (45) and the magnet (41) equipped with grooves (411) and flutes (412);
- in figure 9, a sleeve (9) is represented in perspective;
- in figure 10, a sleeve (9) with a tear (91) is represented in perspective.

## Claims

1. - Guide for flexible pipes (1) **characterized by** being equipped with a handle (2), by being equipped with a base (4) that integrates a magnet (41) and by being equipped with a body (6) and by the orthogonal projection of any transversal section of the body is, in whole or in part, inside to the orthogonal projection of the outer contour line of the handle.

2. - Guide for flexible pipes (1) according to claim no. 1, **characterized in that** the handle (2), the body (6) and the base (4) are a single piece, the base (4) integrating a magnet (41).

3. - Guide for flexible pipes (1) according to claim no. 1, **characterized in that** the body (6) and the base (4) have a removable connection between them.

4. - Guide for flexible pipes (1) according to claim no. 1, **characterized in that** the body (6) and the handle (2) have a removable connection between them.

5. - Guide for flexible pipes (1) according to claim no. 1, **characterized in that** the body (6) and the base (4) have a removable connection between them and **in that** the body (6) and the handle (2) also have a removable connection between them.

6. - Guide for flexible pipes (1) according to claim no. 1, **characterized in that** the outer contour of the handle (21) is equipped with a male and/or female fitting (23) and/or is equipped with one or more recesses (25).

7. - Guide for flexible pipes (1) according to claim no. 3, **characterized in that** the body (6), on its lower surface (62), is equipped with a body/base fitting device (63) and **in that** the upper surface of the base (43) is equipped with a base/body fitting device (44).

8. - Guide for flexible pipes (1) according to claim no. 4, **characterized in that** the body (6), on its upper surface (61), is equipped with a body/handle fitting device (64) and **in that** the lower face of the handle (24) is equipped with a handle/body fitting device (22).

9. - Guide for flexible pipes (1) according to claim no. 7, or claim no. 8, **characterized in that** the body/base fitting device (63) combined with the base/body fitting device (44), and/or the body/handle fitting device (64) combined with the handle/body fitting device (22), prevent the movement of the body (6) around its longitudinal axis.

10. - Guide for flexible pipes (1) according to claims no. 7 and no. 8, **characterized in that** the body/base fitting device (63) combined with the base/body fitting device (44), and the body/handle fitting device (64) combined with the handle/body fitting device (22), allow movement of the body (6) around its longitudinal axis.

11. - Guide for flexible pipes (1) according to claim no. 10, **characterized in that** both the upper surface of the body (61) and the lower surface of the body (62) are equipped with a head pin (721), by comprising, on the upper surface of the base (43), a cavity (321) of conjugate form to that of the head pin (721), by comprising, on the lower face of the handle (24), a cavity (321) of conjugate form to that of the other head pin (721) and by the cross-section of the largest area of each head pin is greater than the cross-section of smaller area of each of the cavities.

12. - Guide for flexible pipes (1) according to claim no. 11, **characterized in that** the head pins (721) have a spherical or spherical cap head.

13. - Guide for flexible pipes (1) according to claim no. 11 or 12, **characterized in that** either the cavity (321) on the upper surface of the base (43), or the cavity (321) on the lower face of the handle (24), be equipped with a first part in the form of a pyramid trunk with circular bases tapering towards the interior of the base (4) and the handle (2), respectively, and of a second part symmetrical to the first and by the common base of the two pyramid trunks has a diameter slightly smaller than the diameter of the head pins (721).

14. - Guide for flexible pipes (1) according to claim no. 5, **characterized in that**, either on the upper surface of the body (61) or on the lower surface of the body (62), be equipped with a locking slide fitting device (31), which is combined with either the combined fitting on the upper surface of the base or with the conjugate fitting on the lower face of the handle.

15. - Guide for flexible pipes (1) according to claim no. 14, **characterized in that** the locking slide fitting device (31) be equipped, either on the upper surface of the base (43), or on the lower face of the handle (24), with a gutter (311) in the shape of a "U" and a concavity (312) and **in that**, both the upper surface of the body (61) and the lower surface of the body (62), be equipped with a protruding area that integrates two rails (711) and, between them, a flexible lamella (712) with a protuberance (7121).

16. - Guide for flexible pipes (1) according to claim no. 1, **characterized in that** the base (4) is equipped with a flap with groove (46), or grooves and the magnet (41) is equipped with one or more grooves (411) aligned with the grooves of the flap and/or the base (4) is equipped with one or more ribs (45) and the magnet (41) is equipped with one or more corresponding flutes (412), or vice-versa.

17. - Process of coupling guides for flexible pipes, all in accordance with the guide for flexible pipes (1) described in claim no. 6, **characterized in that** a guide (1) with handle (2) equipped with a male fitting and another guide (1) with handle (2) equipped with a female fitting, can be joined by the handles by means of a male-female fitting, resulting in a hole (8).

18. - Process of coupling guides for flexible pipes, all in accordance with the guide for flexible pipes (1) described in claim no. 6, **characterized in that** a guide (1) with handle (2) equipped with a recess (25) and another guide (1) with handle (2) equipped with a recess (25), can be joined by the handles by means of a male-female fitting, forming the adjacent recesses (25) a niche.
